# EUROPEAN PATENT APPLICATION

(11) **EP 4 787 877 A1**
(43) Date of publication of application: **05.08.2026**
(21) Application number: 25154853.3
(22) Date of filing: 30.01.2025
(51) Int. Cl.: H04N 23/54, H04N 23/55, H04N 23/667, H04N 25/48

(54) **A VIDEO CAMERA SYSTEM AND A METHOD FOR RECORDING AN OUTPUT VIDEO WITH THE VIDEO CAMERA SYSTEM**

(71) Applicant: poLight ASA, 3125 Tønsberg (NO)
(72) Inventor: Lomas, Daniel, 3125 Tønsberg (NO); Lomas, Caroline, 3125 Tønsberg (NO)
(74) Representative: Plougmann Vingtoft a/s

(57) **Abstract**

The invention relates to a method for recording an output video 10 with a video camera system 12, wherein the video camera system comprising a wobulation system 14, the method comprising the video camera system capturing input frames 20 and from the input frames generating output frames 22, the input and output frames comprising a plurality of pixels 30. The method shifts the wobulation system between four different translation positions, in each shifting position a frame is captured, and when a frame is captured is combined with the previous captured input frame to generate an output frame. The output frames are stored, transmitted to an external receiver, and/or displayed on a screen. The method is shifting the wobulation system between the four translation positions and capturing input frames and generating output frames as long as the video camera systems is recording.

## Description

### FIELD OF THE INVENTION

The present invention relates to a video camera system and a method for recording an output video with a video camera system comprising a wobulation system.

### BACKGROUND OF THE INVENTION

High-resolution video recording is essential in various applications, including microscopy, surveillance, and professional videography. Traditional methods of increasing video resolution often involve using higher resolution sensors, which can be costly and complex. An alternative approach is the use of wobulation systems, which enhance resolution by shifting the image sensor or optical components to capture multiple sub-frames that are then combined to create a higher resolution output frame.

Wobulation systems typically involve shifting the image sensor or optical components along the X and Y axes to capture multiple sub-frames. These sub-frames are then combined to produce a single higher resolution frame. However, this method has inherent drawbacks. One significant issue is the need to reduce the exposure time for each sub-frame to capture multiple sub-frames within the same time frame as a single frame in a conventional system. This reduction in exposure time can lead to increased noise and motion blur, particularly in dynamic scenes or when the camera is handheld.

The trade-off between noise/motion blur and resolution is a critical consideration in the design and implementation of wobulation systems. While super-resolution techniques using wobulation work well in static scenes, such as those captured with a tripod-mounted camera or in microscopy applications, they are less effective in scenarios involving movement. This limitation restricts the broader applicability of wobulation systems in various real-world video recording situations.

Hence, an improved camera system and method for recording high-resolution video using a wobulation system would be advantageous, and in particular a more efficient and/or reliable camera system and method would be advantageous.

### OBJECT OF THE INVENTION

It is an object of the present invention to provide a video camera system and a method for recording an output video with the video camera system recording high-resolution video using a wobulation system.

It is a further object of the present invention to provide an alternative to the prior art.

In particular, it may be seen as an object of the present invention to provide a camera system and a method for recording an output video with the video camera system that solves the above mentioned problems of the prior art.

### SUMMARY OF THE INVENTION

Thus, the above-described objects and several other objects are intended to be obtained in a first aspect of the invention by providing a method for recording an output video with a video camera system, wherein the video camera system comprising a wobulation system, the method comprising the video camera system capturing input frames and from the input frames generating output frames, the input and output frames comprising a plurality of pixels, wherein the method further comprising:
a) positioning the wobulation system into a first translation position and capturing a first input frame,
b) shifting the wobulation system into a second translation position, and capturing a second input frame, wherein when the wobulation system is shifted into the second translation position the second input frame is shifted a shifting distance along the x-axis relative to the first input frame,
c) generating a first output frame by combining the first input frame and the second input frame,
d) shifting the wobulation system into a third translation position, and capturing a third input frame, wherein when the wobulation system is shifted into the third translation position the third input frame is shifted the shifting distance along the y-axis relative to the second input frame,
e) generating a second output frame by combining the second input frame and the third input frame,
f) shifting the wobulation system into a fourth translation position, and capturing a fourth input frame, wherein when the wobulation system is shifted into the fourth translation position the fourth input frame is shifted the shifting distance along the x-axis in the opposite direction of step b) relative to the third input frame,
g) generating a third output frame by combining the third input frame and the fourth input frame,
h) shifting the wobulation system into the first translation position, and capturing another first input frame, wherein when the wobulation system is shifted into the first translation position the first input frame is shifted the shifting distance along the y-axis in the opposite direction of step d) relative to the fourth input frame,
i) generating a fourth output frame by combining the fourth input frame and the first input frame,
j) storing the output frames sequentially within a video file or frame buffer, transmitting the output frames to a receiver and/or continuously displaying the output frames on a display,
k) repeating steps b) through j) as long as the camera is recording.

The present invention aims to provide an improved method and system for recording high-resolution video using a wobulation system. This method mitigates the drawbacks associated with reduced exposure times and enhances the overall image quality in both static and dynamic scenes. The innovation lies in its ability to effectively enhance image quality by dynamically shifting the position of the wobulation system, thereby capturing multiple input frames that are combined to form output frames.

The method involves shifting the wobulation system between four different translation positions along the X and Y axes, capturing input frames at each position, and subsequently combining these frames to generate output frames with enhanced resolution.

The wobulation system is shifted to four different translation positions along the X and Y axes. At each position, an input frame is captured. This shifting allows the system to capture input frames at slightly offset positions.

Each newly captured input frame is combined with the previous captured input frame to generate a new output frame. This continuous process ensures that the number of output frames generated matches the number of input frames captured, maintaining a high level of detail and quality in the recorded video.

The process of alternating shifts and frame combinations continues as long as the camera is recording. This ensures continuous enhancement of the recorded video quality by leveraging the concept of overlapping pixels. The wobulation system captures input frames from multiple perspectives, which are then combined to form output frames with rich image data.

By alternating between higher resolution in the X and Y axes for different colour channels, the system achieves an overall perceived increase in resolution. This results in a significant improvement in video recording quality. The final output video rapidly alternates between higher resolution in the X and Y axes for the red and blue channels, resulting in an overall perceived resolution increase in both axes simultaneously.

A "wobulation system" works by overlapping pixels. It comprises an optical mechanism that can be adjusted or shifted to position the wobulation system in different translation positions. Sub-frames, which in the context of this invention are two consecutive captured input frames, are combined to generate an output frame.

A "frame" refers to a single still image captured by the video camera system. When these frames are played back in sequence at a certain speed, they create the illusion of motion, forming a video. Each frame is essentially a snapshot of the scene at a specific moment in time. The term "input frame" refers to the individual frames captured by the camera system at different translation positions. The "output frame" is created by combining two input frames, resulting in a new frame that incorporates the information from both input frames.

Generally, in this application "recording" is used on recording a video. "capturing" is used about input frames which is captured, while output frames are generated. However, the words recording, capturing and generating may be used interchangeably.

Each frame comprises a plurality of pixels, with each pixel containing an RGB value. The input frames are arranged in a Bayer pattern, divided into arrays of four pixels. Each array comprises two diagonally placed pixels with a green RGB value, one pixel with a blue RGB value, and one pixel with a red RGB value.

RGB values refer to the colour model used in digital imaging and video, where colours are represented by their red, green, and blue components. Each colour is defined by a combination of these three primary colours, with each component typically ranging from 0 to 255. The blue RGB value is the value of the blue component, the red RGB value is the value of the red component, and the green RGB value is the value of the green component.

A 2x2 array is a two-dimensional array with 2 rows and 2 columns. When a pixel in the output frame receives a blue, red, or green RGB value from one of the input frames, it receives the RGB value from the input frame having a corresponding pixel with a blue, red, or green RGB value different from zero.

The method first positions the wobulation system in the first translation position and when in the first translation position the video camera system captures the first input frame. Then the wobulation system shifts to the second translation position, when the wobulation system is in the second translation position the camera system captures the second input frame. The second input frame is shifted substantially by one pixel relative in the x-direction to the first input frame. The first input frame and the second input frame are then combined to form an output frame.

Next the wobulation system shifts to the third translation position, when the wobulation system is in the third translation position the camera system captures the third input frame. The third input frame is shifted substantially by one pixel relative in the y-direction to the second input frame. The second input frame and the third input frame are then combined to form an output frame.

Next the wobulation system shifts to the fourth translation position, when the wobulation system is in the fourth translation position the camera system captures the fourth input frame. The fourth input frame is shifted substantially by one pixel relative opposite to the x-direction to the third input frame. The third input frame and the fourth input frame are then combined to form an output frame.

Finally, the wobulation system shifts back to the first translation position, when the wobulation system is back in the first translation position the camera system captures a new first input frame. The new first input frame is shifted substantially by one pixel relative opposite to y-direction to the fourth input frame. The fourth input frame and the new first input frame are then combined to form an output frame.

The wobulation system continues to move between the first translation position, the second translation position, the third translation position and the fourth translation position as long as the video camera system is recording. In each translation position the camera captures an input frame that is shifted substantially one pixel relative to the previous frame and combines the two last taken images into an output image.

The generated output frames, which are the individual images produced by the system, can be handled in several ways. They can be stored sequentially within a video file or a frame buffer. A video file is a digital container that holds the sequence of frames, while a frame buffer is a temporary storage area in memory that holds the frames before they are processed or displayed. These frames can also be transmitted to a receiver, which could be another device or system that processes or displays the frames. Alternatively, the frames can be continuously displayed on a display device, such as a monitor or screen.

Ideally, this entire process is performed in real time, meaning the frames are generated, stored, transmitted, and displayed almost instantaneously as they are created. However, there is also the possibility of a time delay, where there is a lag between the generation of the frames and their subsequent storage, transmission, or display. This delay could be due to processing requirements, network latency, or other factors.

Through this sophisticated method of capturing and combining frames, the invention addresses the limitations posed by reduced exposure times and enhances both static and dynamic scenes. By alternating between higher resolution in the X and Y axes for different colour channels, the system achieves an overall perceived increase in resolution, thus offering a significant improvement in video recording quality.

According to an embodiment, the method comprises that the shifting distance along the x-axis and the shifting distance along the y-axis substantially are the width or height of a pixel.

When the wobulation system shifts, it shifts preferably so much that the incoming light beams are deviated by the wobulation system, so a light beam is shifted one pixel when it hits the cameras image sensor compared to the previous recorded frame. Therefore, the captured frame will have all pixel shifted one place relative to the previous captured frame either in the x-direction or in the y-direction.

The method comprises that the shifting distance is substantially the width or height of a pixel. "Substantially" is to be understood as not necessarily being exactly the width or height of a pixel but within an error margin, which may be between 90 % and 110 % of the size of a pixel. This ensures precise alignment and optimal overlap of pixels, further enhancing the resolution and quality of the output video.

According to an embodiment, the method comprises that each pixel is comprising RGB values, the pixels are arranged within the frames within a plurality of arrays of four pixels forming 2 x 2 arrays, wherein when capturing an input frame green RGB values are recorded for two diagonally placed pixels of each array of four pixels, a blue RGB value is recorded for one of the other pixels of the array of four pixels, and a red RGB value is recorded for the last pixel of the array of four pixels.

The pixel recording segments of the image sensor within the camera are organized so one segment is recording either the green RGB value, the red RGB value or the blue RGB values for the pixel recorded by the segment. The segments are arranged so that within an array of 2x2 segments, two diagonally placed segments are recording a green RGB value for the pixels, one segment is recording the blue RGB value for the pixel, and one segment is recording a red RGB value for the pixel. This is known as a Bayer pattern and ensures accurate colour representation and enhances the overall image quality by applying the Bayer pattern for efficient colour sampling.

According to an embodiment, the method further comprises generating an output frame by combining two input frames, the method further comprises that:
- each pixel within the output frame is receiving the green RGB value from a corresponding pixel within one of the input frames,
- half of the pixels within the output frame receiving the red RGB value from the corresponding pixel within one of the input frames,
- half the pixels within the output frame receiving a blue RGB value from the corresponding pixel within one of the input frames,
- allocating the red RGB value to pixels which have not received a red RGB value from the input frames based on the red RGB values of neighbouring pixels which have received a red RGB values from the input frames, and
- allocating the blue RGB value to pixels which have not received a blue RGB value from the input frames based on the blue RGB values of neighbouring pixels which have received a blue RGB value from the input frames.

This method ensures that each pixel in the output frame is accurately assigned RGB values, enhancing the colour fidelity and overall quality of the recorded video.

Corresponding pixels are pixels that represent information from the same incoming light beams. So that when in the first translation position one pixel recording segment is receiving light from a given incoming light beam. When the wobulation system is shifted to the second translation position, it is the neighbouring pixel recording segment that receives the same incoming light beams, so it will be the next placed pixel in the second input image that is the corresponding pixel. And thus, in the same way when placing the wobulation system in a third translation position and in a fourth translation position.

According to an embodiment, the method comprises that the video camera system comprises a video see through (VST) camera.

A VST camera allows the user to see the real-world environment while simultaneously viewing digital content overlaid on the real world. Integrating a VST camera into the system enhances the functionality and versatility of the video recording process, making it suitable for applications such as augmented reality (AR) and other advanced imaging technologies.

According to an embodiment, the method comprises that the wobulation system comprises an optical mechanism, the translation position of which is adjusted when the wobulation system is shifted among the first, second, third and fourth translation positions.

This adjustment ensures precise alignment and optimal performance of the wobulation system, contributing to the enhanced resolution and quality of the output video.

According to an embodiment, the method comprises that the optical mechanism comprises a mirror, a prism, or a wedge.

The optical mechanism may comprise one or more optical components, where in optical components may comprise one or more mirrors, one or more prisms and/or one or more wedges.

According to an embodiment, the method comprises that the optical mechanism comprises an adjustable lens or an adjustable wedge.

The optical mechanism may comprise one or more optical components, where in optical components may comprise adjustable lenses or wedges. The adjustable lenses or wedges may comprise a deformable non-fluid lens body making it possible to adjust the form of the lens or wedge.

This provides additional flexibility in adjusting the translation positions of the wobulation system, further enhancing the precision and quality of the captured video.

According to an embodiment, the method comprises that the adjustable lens or adjustable wedge comprises a transparent back window, a deformable non-fluid lens body, a movable glass plate and at least two actuators.

This configuration allows for precise control and adjustment of the optical mechanism, enhancing the accuracy and quality of the video recording process.

A deformable non-fluid lens body is a lens component that can change its shape to adjust optical properties without using any liquid. Instead, it uses solid, flexible materials. This type of lens is typically sandwiched between a glass plate or a deformable membrane and a transparent back window. The shape of the lens is altered by an actuator, which applies force to the glass plate.

According to an embodiment, the method comprises that when shifting the wobulation system among the first translation position, the second translation position, the third translation position and the fourth translation position the actuators adjust the movable glass plate to adjust the form of the optical mechanism to change the optical path through the adjustable lens or the adjustable wedge.

The optical path is the trajectory that a light beams follows as it propagates through the system.

According to an embodiment, the method comprises that the actuators are piezoelectric elements.

The actuators may preferably be piezoelectric elements. However, the actuators may alternatively be voice coils motors, electrostrictive materials, shape memory alloys, magnetostrictive actuators, electrostatic actuators or other suitable actuators.

According to an embodiment, the method comprises that the output video is recorded with at least 120 frames per second.

In a second aspect, the invention relates to a video camera system comprising a wobulation system, the video camera system is configured to perform the method of the first aspect.

The first, and second aspect of the present invention may each be combined with any of the other aspects. These and other aspects of the invention will be apparent from and elucidated with reference to the embodiments described hereinafter.

### BRIEF DESCRIPTION OF THE FIGURES

The video camera system and the method according to the invention will now be described in more detail with regard to the accompanying figures. The figures show one way of implementing the present invention and is not to be construed as being limiting to other possible embodiments falling within the scope of the attached claim set.
Fig. 1 illustrates the video camera system comprising a camera module.
Fig. 2 illustrates the input frames and the output frames.
Fig. 3 illustrates a section of an input frame and a section of an output frame.
Fig. 4 illustrates a first input frame and a second input frame, where the second input frame is shifted one pixel relative to the first input frame.
Fig. 5 illustrates a possible embodiment of a wobulation system.
Fig. 6 shows the wobulation system from fig. 5 from above.
Fig. 7a-7h illustrates the four different translation positions.
Fig. 8 illustrates shifting according to the method of this invention, where the incoming light will be shifted one position between two input frames for each shift.
Fig. 9 illustrates that when an input frame is captured, within an array of four pixels, for two pixels a green RGB value is captured, for one pixel a red RGB value is captured, and for one pixel a blue pixel is captured.
Fig. 10 illustrates an alternative wobulation system.
Fig. 11 is a flow chart of the method according to the invention.

### DETAILED DESCRIPTION OF AN EMBODIMENT

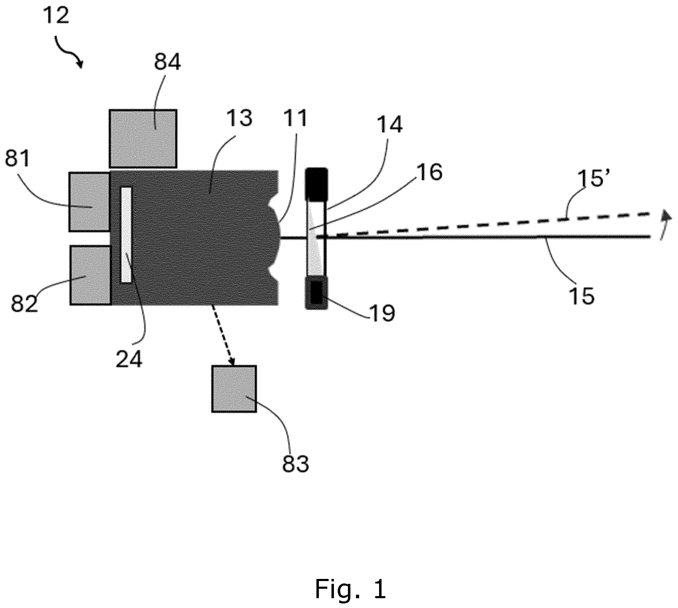

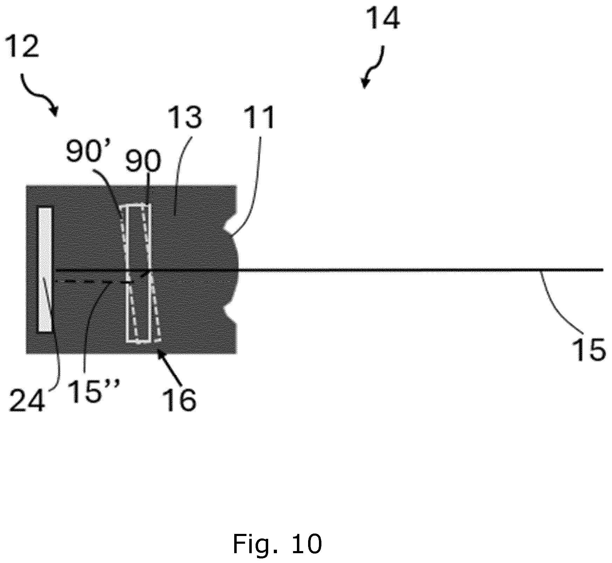

Fig. 1 illustrates the video camera system 12 comprising a camera module 13, which may be a video see through (VST) camera and a wobulation system 14. The wobulation system may deflects incoming beams 15, 15' to be recorded by the camera module 13 by the image sensor 24. The camera module comprises a lens 11 in fig. 1. The video camera system may comprise additional lenses, mirrors or other optical components not shown in fig. 10.

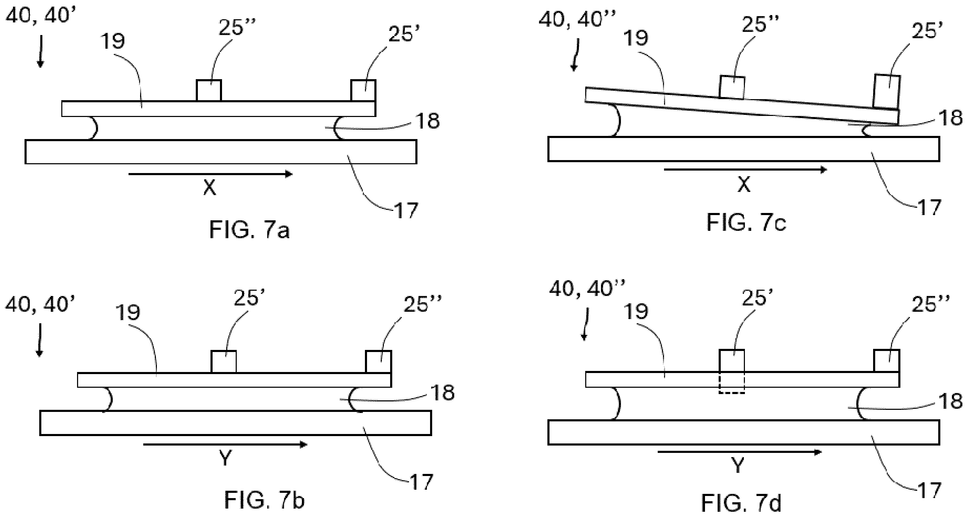

The wobulation system is shifting between four translation positions 40 (see fig. 7a-7h). For each translation position the camera module captures an input frame 20. Incoming light beams 15 are passing through the wobulator 14 which may deflect the light beams depending on which translation position the wobulator system 14 is positioned in illustrated with the beam 15' that is deflected. So, the wobulator system may be in a first translation position when receiving and not deflecting the beam 15 and the wobulator system may be in a second translation position when receiving and deflecting the beam 15'. The beams 15 and 15 'follows different optical paths through the system.

The wobulator system may comprise a structure 19 fixing the wobulator system 14 within the video camera system 12. The wobulation system comprises an optical mechanism 16, which is shifted when the wobulation system shifts between translation positions.

The video camera system may be storing the output frames 22 sequentially within a video file 81 or within a frame buffer 82, transmitting the output frames to a receiver 83 and/or continuously displaying the output frames on a display 84.

In the drawing the wobulation system is placed in front of the lens 11, but alternatively the wobulation system may be placed between the lens 11 and the image sensor 24 in the camera module 13.

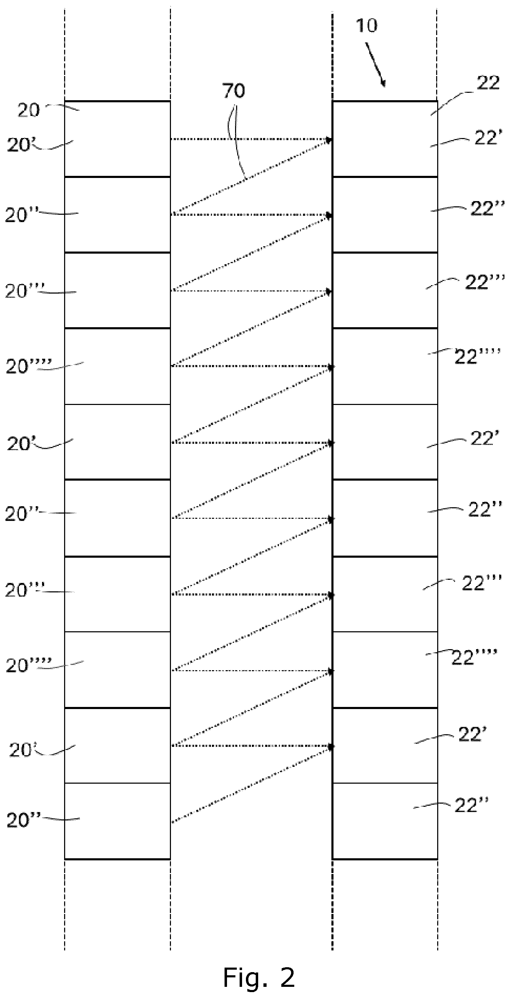

Fig. 2 illustrates the input frames 20 and the output frames 22. The output frames are forming the output video 10 which is a sequence of output frames. When the video camera system 12 has captured two input frames, the two input frames are used to generate an output frame 22 illustrated by the arrows 70. The first input frame 20' and the second input frame 20" is used to generate the first output frame 22'. The second input frame 20" and the third input frame 20‴ are used to generate the second output frame 22". The third input frame 20‴ and the fourth input frame 20"" are used to generate the third output frame 22'". And then a new captured first input frame 20' and the fourth input frame 20"" are combined to generate the fourth output frame 22"". The method continues running like this as long as the video camera system is recording.

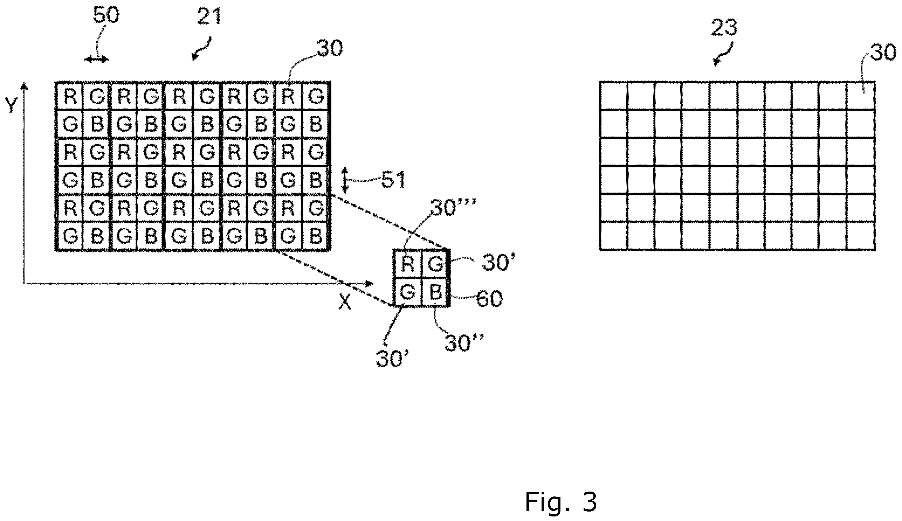

Fig. 3 shows a section 21 of an input frame 20 and a section 23 of an output frame 22. Fig. 3 illustrates that the input frame and the output frames comprise pixels 30. When recording a video, the system is shifted substantially by one pixel between each input frame. The shift is illustrated by the arrows 50 and 51 illustrating a shift in the x-direction along the x-axis X and a shift in the y-direction along the y-axis Y.

When shifted from the first translation position to the second translation position the wobulation system is shifted substantially one pixel in the x-direction. The x-direction is illustrated by the arrow on the x-axis X. When shifted from the second translation position to the third translation position the wobulation system is shifted substantially one pixel in the y-direction. The y-direction is illustrated by the arrow on the y-axis Y. When shifted from the third translation position to the fourth translation position the wobulation system is shifted substantially one pixel in the opposite direction than the x-direction. And when shifted from the fourth translation position back to the first translation position the wobulation system is shifted substantially one pixel in the opposite direction than the x-direction.

The input frame 20 is divided into arrays of four pixels 60, forming a 2 x 2 array. When capturing an input frame 20 green RGB values (G) are recorded for two diagonally placed pixels 30' of each array of four pixels, a blue RGB value (B) is recorded for one of the other pixels 30" of the array of four pixels, and a red RGB value (R) is recorded for the last pixel 30‴ of the array of four pixels. This is the Bayer pattern, so each pixel only records the RGB value of one colour.

In the section 23 of an output frame 22 each pixel comprises values for all three colours by combining values for different corresponding pixels and neighbouring pixels recorded in two input frames used to generate the output frame.

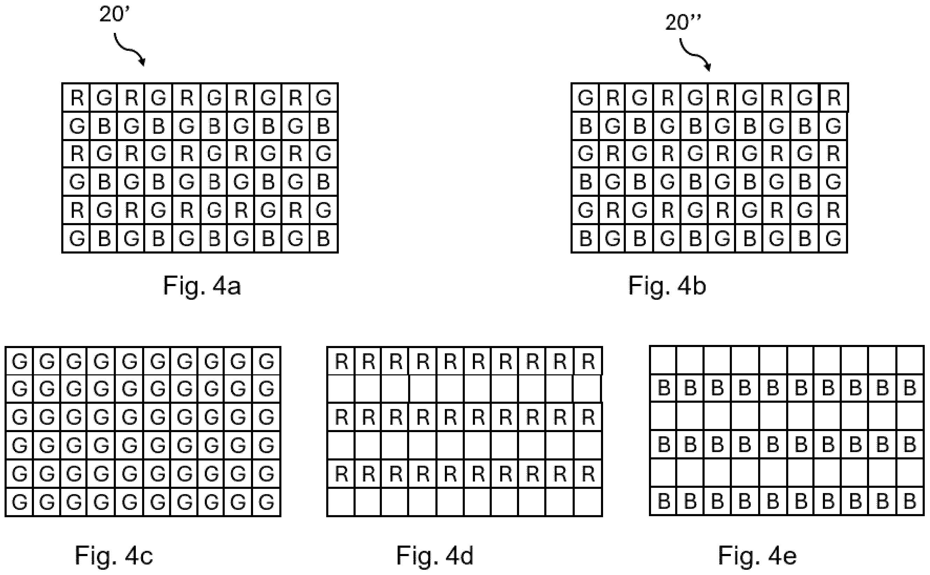

Fig. 4 illustrates a first input frame 20' and a second input frame 20" where the second input frame is shifted one pixel relative to the first input frame in the x-direction.

Then pixel by pixel the two input frames are combined. There are green RGB values for all corresponding pixels as illustrated in fig. 4c. But for the red RGB values there are only values for half the pixels as illustrated in fig. 4d and also for the blue RGB values, there are only blue values for half the pixels. For both the missing red and blue these values are provided by, for instance, taking the average of the two neighbouring pixels having red respective blue values. Final each pixel in the output frame 22 is receiving green, blue and red values for each pixel by combining the values for fig. 4c, fig. 4d and fig. 4e so that each pixel in the output frame comprises a RGB value comprising a red, a green and a blue value.

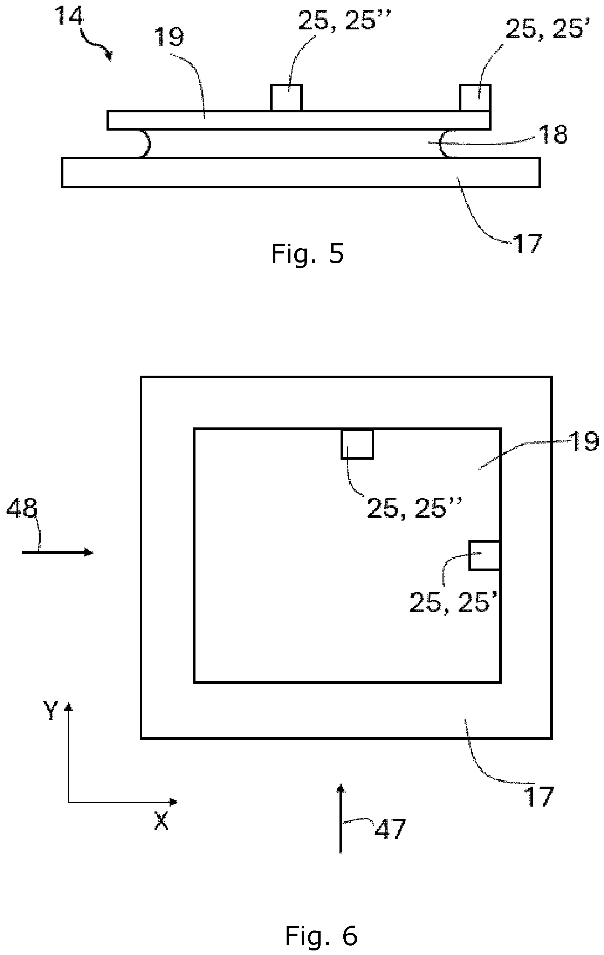

Fig. 5 illustrates a possible embodiment of a wobulation system 14. The wobulation system 14 comprises an adjustable wedge comprising a transparent back window 17, a deformable non-fluid lens body 18, a movable glass plate 19 and at least two actuators 25. One actuator, the x-axis actuator 25', moves the glass plate so it tilts along the x-axis X, the other actuator, the y-axis actuator 25" moves the glass plate, so it tilts along the y-axis Y. As shown in fig. 5 the wobulation system is in a first translation position, where in this case, the movable glass plate 19 substantially is parallel to the back window 17. In this case none of the two actuators are activated and incoming beams 15 (not shown) are passing through the wobulation system without being deflected.

Then, when one of the actuators is activated, it pushes down onto the edge of the glass plate 19 and tilts the glass plate, so that the incoming beams are deflected in either the x-direction, the y-direction or both. When the x-axis actuator 25' is activated the wobulation system is placed in the second translation position where the second input frame is captured. When the y-axis actuator is also activated, so both actuators are actuated and also pushes down on the glass plate, the glass plate is tilted in the both the x- and y-direction so that the wobulation system is placed in the third translation position where the third input frame is captured. Then when the first activated actuator is deactivated and moves back, the wobulation system is moved to a fourth translation position where only the y-axis actuator is activated so that the glass plate moves to a position where it in the x-direction is parallel with the back window but is tilted in the y-direction. Finally, the y-axis actuator is deactivated and thereby moves back, allowing the glass plate to move to the original position, the first translation position. In this manner the system consecutively moves the wobulation system between the four translation positions.

Fig. 6 shows the wobulation system 14 from fig. 5 from above seeing the movable glass plate 19 and below it the transparent back window 17. The deformable non-fluid lens body 18 cannot be seen as it is covered by the movable glass plate 19. The two actuators 25', 25" are seen. The actuators are positioned so they can tilt the glass plate so the glass plate will tilt either in the x-direction X or the y-direction Y or if both actuators are activated, the plate tilts both in the x-direction and the y-direction. The arrows 47 and 48 illustrates a first side 47 and a second side 48.

Fig. 7a-7h illustrates the four different translation positions. Fig. 7a and 7b illustrates the first translation position 40'. In fig. 7a the wobulation system is shown from the first side 47 (see fig. 6) and in fig. 7b the wobulation system is shown from the second side 48 (see fig. 6). In fig. 7a and 7b neither of the actuators 25', 25" are activated, therefore the glass plate 19 is substantially parallel to the back window 17.

Fig. 7c and 7d illustrates the second translation position 40". One of the actuators, the x-axis actuator 25' is activated pushing down one side of the glass plate 19 deforming the non-fluid lens body 18, so that seen from the first side 47 in fig. 7c the glass plate is tilted in the x-direction X, while seen from the second side 48 in fig. 7d the glass plate is not tilted, but the distance between the glass plate and the back window 17 may be increased at the second side due to the deformation of the non-fluid lens body 18. The dotted lines of the x-axis actuator 25' is illustrating the part of the x-axis actuator that is not visible in fig. 7d, as it is partly hidden behind the other component.

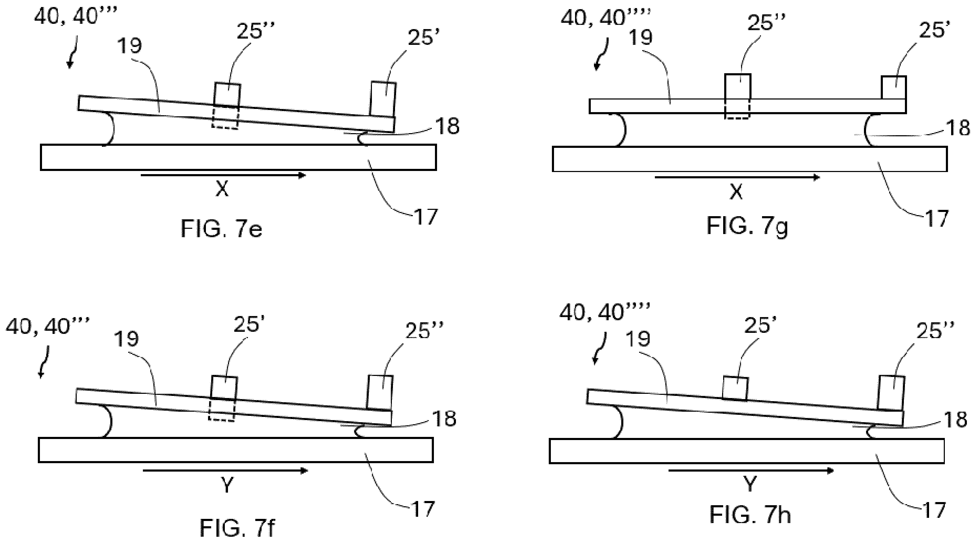

Fig. 7e and 7f illustrates the third translation position 40'". Here both actuators 25', 25" are activated both pushing one edge of the glass plated down. This has the effect that seen from both sides, seen from the first side 47 in fig. 7e and from the second side 47 in fig 7f, the glass plate 19 is tilted.

Fig. 7g and 7h illustrate the fourth translation position 40"". Here one of the actuators, the x-axis actuator 25' has been deactivated so only the other actuator, the y-axis actuator 25" is pushing down on the glass plate, so seen from the first side the glass plate is parallel to the back window 17, and seen from the second side the glass plate is tilted in the y-direction Y.

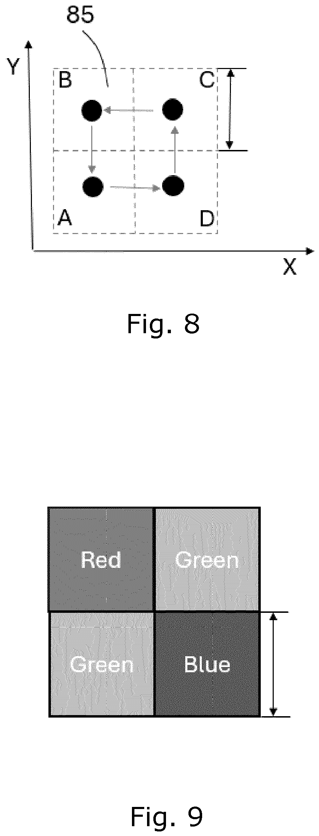

The effect of the different translation positions illustrated in fig. 7a-h is illustrated in fig. 8. Fig. 8 illustrates that shifting according to the method of this invention the incoming light will be shifted substantially one pixel between two input frames for each shift. Fig. 8 shows four recording segments 85, A-D, in an image sensor, forming a 2x2 array.

When the wobulation system is positioned in the first translation position an incoming light beam will be hitting segment A, recording one of the RGB values, for instance the green RGB-value. When the wobulation system is positioned in the second translation position the same incoming light beam will be hitting segment D of the input sensor, recording another RGB value, for instance the blue RGB-value. When the wobulation system is positioned in the third translation position the same incoming light beam will be hitting a segment C of the input sensor, recording one of the RGB values, for instance the green RGB-value. And when the wobulation system is positioned in the fourth translation position the same incoming light beam will be hitting a segment B of the input sensor recording a RGB value, for instance the red RGB-value.

The incoming beam is deflected every time the wobulation system is shifting between translation position, so that when the wobulation system is positioned in the first translation position an incoming beam is hitting segment A, when the wobulation system is shifted to second translation position the same incoming beam is deflected to hit segment D, when the wobulation system is shifted to the third translation position the same incoming beam is deflected to hit segment C, and when the wobulation system is shifted to the fourth translation position the same incoming beam is deflected to hit segment B.

Therefore, when combining two input frames the frames are compared by comparing corresponding pixels, where the corresponding pixel is shifted one position between two input pixels being combined into an output pixel in the output frame.

Fig. 9 illustrates that when an input frame is captured, within an array of four pixels, for two pixels a green RGB value is captured, for one pixel a red RGB value is captured, and for one pixel a blue pixel is captured. This is the Bayer pattern. Therefore, in four consecutive input frames each pixel twice has the green RGB value captured, one a red RGB value captured and on a blue RGB value captured as the recording of the pixels are shifted as illustrated in fig. 8. Also, the pixel pitch is illustrated by a double arrow. The pixel pitch refers to the distance between the centres of two adjacent pixels on a display, which in this invention also is the shifting distance.

Fig. 10 illustrates an alternative wobulation system. I this case the optical mechanism 16 is positioned inside the camera module 13, so it is placed between the image sensor 24 and the lens 11.

The optical mechanism 16, comprises a flat plate 90 prism, which may be tilted by actuators, such as voice coils motor (VCM) actuators (not shown), to create XY shift of the incoming light beams 15, 15" in the x-direction X and/or the y-direction Y, as illustrated by a tilted flat plate 90' in dashed lines, deflecting the light beam 15" shown with dashed lines so the the same object gets projected onto the sensor with a one pixel shift, while the not-tilted flat plate 90, shown in continuous lines, does not deflect the light beam 15.

The flat plate is positioned in the video camera system 12, where the incoming light is recorded by the image sensor 24. The flat plate can be tilted to deflect the incoming beam in the x-direction and the y-direction, such that the flat plate is shifting between the first, second, third, and fourth translation position.

The video camera system may also comprise additional lenses, mirrors or other optical components not shown in fig. 10.

In yet another possible alternative wobulation system an entire lens stack may be shifted in x- and y- directions, while the image sensor remains static, called barrel shift Optical Image Stabilization (OIS), which may be done using VCM actuators.

The light beam 15", shown with dashed lines, is the incoming beam 15 being deflected by the tilted plate 90' shown in dashed lines. The continues line between the plate 90 and the image sensor 24 is the incoming light beam going through the untilted plate 90 not being refracted.

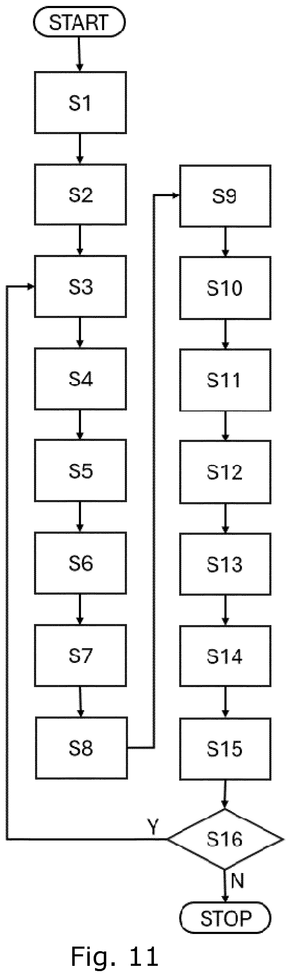

Fig. 11 is a flow chart illustrating the method of the invention. When recording is started, the method is positioning S1 the wobulation system into a first translation position where the method is capturing S2 the first input frame.

Then the method is shifting S3 the wobulation system into a second translation position and is when in the second translation position capturing S4 a second input frame. Then the method is generating S5 a first output frame by combining the first input frame and the second input frame.

Then the method is shifting S6 the wobulation system into a third translation position and is when in the third translation position capturing S7 a third input frame. After which the method is generating S8 a second output frame by combining the second input frame and the third input frame.

Then the method is shifting S9 the wobulation system into a fourth translation position and is when in the fourth translation position capturing S10 a fourth input frame. After which the method is generating S11 a third output frame by combining the third input frame and the fourth input frame.

Then the method is shifting S12 the wobulation system back into the first translation position and is when in the first translation position capturing S13 a new first input frame. After which the method is generating S14 a fourth output frame by combining the fourth input frame and the new first input frame.

The method is either storing, transmitting and/or displaying S15 the generated output frames sequentially. The method may be storing the output frames within a video file or a frame buffer, transmitting the output frames to a receiver and/or continuously displaying the output frames on a display.

Steps S3 to S15 may be repeated as long as the video camera system is recording S16.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. A method for recording an output video (10) with a video camera system (12), wherein the video camera system comprising a wobulation system (14), the method comprising the video camera system capturing input frames (20) and from the input frames generating output frames (22), the input and output frames comprising a plurality of pixels (30), wherein the method further comprising:
a) positioning the wobulation system (14) into a first translation position (40') and capturing a first input frame (20'),
b) shifting the wobulation system into a second translation position (40"), and capturing a second input frame (20"), wherein when the wobulation system is shifted into the second translation position the second input frame is shifted a shifting distance (50) along the x-axis (X) relative to the first input frame,
c) generating a first output frame (22') by combining the first input frame (20') and the second input frame (20"),
d) shifting the wobulation system (14) into a third translation position (40'"), and capturing a third input frame (20‴), wherein when the wobulation system is shifted into the third translation position the third input frame is shifted the shifting distance (51) along the y-axis (Y) relative to the second input frame,
e) generating a second output frame (22") by combining the second input frame (20") and the third input frame (20‴),
f) shifting the wobulation system (14) into a fourth translation position (40""), and capturing a fourth input frame (20""), wherein when the wobulation system is shifted into the fourth translation position the fourth input frame is shifted the shifting distance along the x-axis (X) in the opposite direction of step b) relative to the third input frame,
g) generating a third output frame (22‴) by combining the third input frame (20‴) and the fourth input frame (20""),
h) shifting the wobulation system (14) into the first translation position (40'), and capturing another first input frame (20'), wherein when the wobulation system is shifted into the first translation position the first input frame is shifted the shifting distance along the y-axis (Y) in the opposite direction of step d) relative to the fourth input frame,
i) generating a fourth output frame (22"") by combining the fourth input frame (20"") and the first input frame (20'),
j) storing the output frames (22, 22', 22", 22‴, 22"") sequentially within a video file (81) or frame buffer (82), transmitting the output frames to a receiver (83) and/or continuously displaying the output frames on a display (84),
k) repeating steps b) through j) as long as the video camera system is recordi ng.

2. The method according to claim 1, wherein the shifting distance (50) along the x-axis (X) and the shifting distance (51) along the y-axis (Y) substantially are the width or height of a pixel (30).

3. The method according to claims 1 or 2, wherein each pixel (30) is comprising RGB values, the pixels are arranged within the frames (20, 22) within a plurality of arrays of four pixels (60) forming 2 x 2 arrays, wherein when capturing an input frame (20) green RGB values are recorded for two diagonally placed pixels (30') of each array of four pixels, a blue RGB value is recorded for one of the other pixels (30") of the array of four pixels, and a red RGB value is recorded for the last pixel (30‴) of the array of four pixels.

4. The method according to claim 3, wherein the method further comprises generating an output frame (22) by combining two input frames (20), the method further comprises that:
• each pixel (30) within the output frame receiving the green RGB value from a corresponding pixel (30) within one of the input frames,
• half of the pixels within the output frame receiving the red RGB value from the corresponding pixel within one of the input frames,
• half the pixels within the output frame receiving a blue RGB value from the corresponding pixel within one of the input frames,
• allocating the red RGB value to pixels which have not received a red RGB value from the input frames based on the red RGB values of neighboring pixels which have received a red RGB values from the input frames, and
• allocating the blue RGB value to pixels which have not received a blue RGB value from the input frames based on the blue RGB values of neighboring pixels which have received a blue RGB value from the input frames.

5. The method according to any of the claims 1-4, wherein the video camera system (12) comprises a video see through (VST) camera (13).

6. The method according to any of the claims 1-5, wherein the wobulation system (14) comprises an optical mechanism (16), the translation position of which is adjusted when the wobulation system is shifted among the first (40'), second (40"), third (40‴) and fourth (40"") translation positions (40).

7. The method according to any of the claims 1-6, wherein the optical mechanism (16) comprises a mirror, a prism, or a wedge.

8. The method according to any of the claims 1-7, wherein the optical mechanism (16) comprises an adjustable lens or an adjustable wedge.

9. The method according to claim 8, wherein the adjustable lens or adjustable wedge comprises a transparent back window (17), a deformable non-fluid lens body (18), a movable glass plate (19) and at least two actuators (25, 25', 25").

10. The method according to claim 9, wherein when shifting the wobulation system (14) among the first translation position (40'), the second translation position (40"), the third translation position (40‴) and the fourth translation position (40""), the actuators (25) adjust the movable glass plate (19) to adjust the form of the optical mechanism (16) to change the optical path through the adjustable lens or the adjustable wedge.

11. The method according to any of the claims 9-10, wherein the actuators (25) are piezoelectric elements.

12. The method according to any of the preceding claims, wherein the output video (10) is recorded with at least 120 frames per second.

13. A video camera system (12) comprising a wobulation system (14), the video camera system is configured to perform the method of any of the claims 1-12.
